(19)

Europäisches
Patentamt
European
Patent Office
Office européen
des brevets

(11) **EP 2 123 533 B1**

(12) **EUROPEAN PATENT SPECIFICATION**

(45) Date of publication and mention
of the grant of the patent:
**31.08.2011 Bulletin 2011/35**

(51) Int Cl.:
***B60W 10/06*** *(2006.01)*   ***B60W 10/10*** *(2006.01)*
***B60W 30/18*** *(2006.01)*   ***B60W 50/08*** *(2006.01)*

(21) Application number: **09160016.3**

(22) Date of filing: **12.05.2009**

(54) **Control apparatus of hydraulic driven vehicle**

Steuervorrichtung für ein hydraulisch angetriebenes Fahrzeug

Appareil de contrôle de véhicule à commande hydraulique

(84) Designated Contracting States:
**AT BE BG CH CY CZ DE DK EE ES FI FR GB GR
HR HU IE IS IT LI LT LU LV MC MK MT NL NO PL
PT RO SE SI SK TR**

(30) Priority: **13.05.2008 JP 2008126366**

(43) Date of publication of application:
**25.11.2009 Bulletin 2009/48**

(73) Proprietors:
 • **Kobelco Cranes Co., Ltd.
  Tokyo 141-8626 (JP)**
 • **Kabushiki Kaisha Kobe Seiko Sho (Kobe Steel,
  Ltd.)
  Kobe-shi,
  Hyogo 651-8585 (JP)**

(72) Inventors:
 • **Sugano, Naoki
  Kobe-shi Hyogo 651-2271 (JP)**

 • **Hori, Naoto
  Kobe-shi Hyogo 651-2271 (JP)**
 • **Kobayashi, Takahiro
  c/o Okubo Plant in Kobelco Cranes Co., Ltd.
  Akashi-shi Hyogo 674-0063 (JP)**
 • **Shimomura, Koichi
  c/o Okubo Plant in Kobelco Cranes Co., Ltd.
  Akashi-shi Hyogo 674-0063 (JP)**
 • **Tsunoo, Taisuke
  c/o Okubo Plant in Kobelco Cranes Co., Ltd.
  Akashi-shi Hyogo 674-0063 (JP)**
 • **Terasaka, Joji
  c/o Okubo Plant in Kobelco Cranes Co., Ltd.
  Akashi-shi Hyogo 674-0063 (JP)**

(74) Representative: **TBK
  Bavariaring 4-6
  80336 München (DE)**

(56) References cited:
  **EP-A1- 1 655 469    US-A- 4 523 892
  US-A- 5 967 756    US-A1- 2008 047 245**

EP 2 123 533 B1

**Description**

**BACKGROUND OF THE INVENTION**

**1. Field of the Invention**

The present invention relates to a control apparatus of such a hydraulic driven vehicle as a wheel loader.

**2. Description of the Reflated Art**

Generally, this kind of the hydraulic driven vehicle has a hydraulic transmission (HST). In this hydraulic transmission, a hydraulic motor is driven to rotate by means of the hydraulic oil delivered from a hydraulic pump driven by an engine, and power of the hydraulic pump is transmitted to wheels.

However, according to the conventional HST technology, an engine rotating speed is controlled by the amount of manipulated accelerator or the amount of opened throttle, regardless of whether the vehicle is driving on a flat ground that needs less driving energy or driving on an uphill road that needs more driving energy. Therefore, the conventional HST technology has problems of low energy efficiency and low fuel economy.

On the contrary, a so-called hybrid method described in Japanese Patent Laid Open No. 2003-264903 is known as one of countermeasures against low fuel economy. In the hybrid method, a motor having generator function is mounted on a common shaft with a hydraulic pump. The energy which is generated when the vehicle reduces its driving speed is recovered by a generating function of the motor and stored in a battery. When the vehicle starts to accelerate, the electric power stored in the battery drives the motor to assist the engine. As this hybrid method utilizes regenerative energy, the fuel economy is improved.

However, as in this hybrid method, the motor and the battery must be added to a system, so the manufacturing cost becomes very expensive. Further, in addition to this problem, the hybrid method has its own problem that needs more weight and more space. These problems have prevented the hybrid system from spreading. Furthermore, a control apparatus according to the preamble of claim 1 is known from US 4,523,892 A.

**SUMMARY OF THE INVENTION**

An object of the present invention is, based on the hydraulic transmission, to provide a control apparatus of a hydraulic driven vehicle which improves fuel economy and energy efficiency. According to the present invention, this object is solved by a control apparatus having the features of claim 1.

A control apparatus of a hydraulic driven vehicle of the present invention comprises an engine, a hydraulic pump that is driven by the engine and a hydraulic motor for driving. The hydraulic motor is driven by hydraulic oil delivered rom the hydraulic pump. A driving mode detecting means recognizes whether the hydraulic driven vehicle is in a first driving mode that needs relatively less driving energy or in a second driving mode that needs relatively more driving energy. A control means controls an engine rotating speed, based on the driving mode detected by the driving mode detecting means. This control means executes a normal control that holds the engine rotating speed relatively lower in the first driving mode, and the control means also executes a power control that holds the engine rotating speed relatively higher in the second driving mode.

The control apparatus of the hydraulic driven vehicle relating to the present invention, in case of the first driving mode that needs relatively less driving energy, decreases fuel consumption by reducing the engine rotating speed as the normal control, and in case of the second driving mode that needs relatively more driving energy, secures the driving energy by switching to the power control that increases the engine rotating speed. Therefore, the present invention is able to increase energy efficiency securing necessary driving performance and it is able to considerably improve the fuel economy.

Moreover, the driving mode detecting means detects either the vehicle driving acceleration or a body inclination angle as an information of the driving modes. Further, the control means executes either the normal control that is used for driving on an uphill road or the power control that is used for driving on a flat ground. The normal control is executed when either the driving acceleration is more than a set value for driving acceleration or the body inclination angle is less than another set value for body inclination angle. When these two conditions are not fulfilled, the power control is executed.

In a preferred embodiment of the present invention, the driving mode detecting means detects the driving acceleration as the information of the driving mode. The control means changes to decrease the set value for driving acceleration at the high driving speed zone, responding to the vehicle driving speed detected by a vehicle driving speed detecting means.

In this embodiment, as a body weight is loaded on the body in driving on the uphill road, the driving acceleration is decreased, therefore the driving acceleration becomes lower than that in driving on the flat ground. Accordingly, detecting the driving acceleration makes it possible to decide whether said vehicle is in driving on the flat ground or in driving on the uphill road.

By the way, the driving acceleration changes to decrease at the high speed zone responding to the vehicle driving speed regardless of driving on the flat ground or driving on the uphill road. Therefore, in the case that the driving acceleration which decides whether the vehicle is in driving on the flat ground or in driving on the uphill road is fixed at a constant value regardless of the vehicle driving speed, unless the vehicle driving speed exceeds the constant value, it is not possible to recognize being in driving on the uphill road. Accordingly, it may occur that the power comes short in the low driving speed zone in driving on the uphill road.

In this point, in another preferred embodiment where the set value for driving acceleration changes to decrease at the high speed zone responding to the vehicle driving speed, by deciding this set value so as to become larger than the driving acceleration in the full range of the vehicle driving speed, it is possible to change to the power control from a start of driving uphill. Therefore, it is possible to secure enough power for driving on the uphill road.

When the control means is in the normal control and the vehicle driving speed exceeds the set value for driving speed, it is possible to change to the power control. In this case, the driving acceleration in the high speed zone can be improved.

Moreover, when the control means is in the normal control, it is possible to decrease the amount of fuel injection responding to the amount of manipulated accelerator less than that in the power control. Further, when the control means is in the normal control, it is possible to limit the maximum value of the amount of fuel injection corresponding to the detected amount of manipulated accelerator less than that in the power control. Furthermore, when the control means is in the normal control, it is possible to increase a displacement of a variable displacement pump more than that in the power control.

Moreover, in further another preferred embodiment of the present invention, using a mode switching means, an operator can select either an automatic control mode that automatically switches the normal control to the power control responding to the first driving mode or the second driving mode, or the power control mode that stops the automatic control mode and executes only the power control. In this case, according to operator's preference of operation and the driving condition, the operator can select optionally between the automatic control mode that improves the fuel economy and the power control mode that gives a priority to the power.

**BRIEF DESCRIPTION OF THE DRAWINGS**

Fig. 1 is a block diagram showing a hydraulic circuit and a control system relating to the first embodiment of the present invention;
Fig. 2 is a graph to show a relation between vehicle driving speed and driving acceleration on the flat ground and the uphill road;
Fig. 3 is a flow chart to explain functions of the first embodiment of the present invention;
Fig. 4 is a graph to show a relation between the amount of manipulated accelerator and the revised amount of manipulated accelerator of the first embodiment of the present invention;
Fig. 5 involves graphs to show (a) a time chart of the revised amount of manipulated accelerator and (b) a time chart of the engine rotating speed (amount of fuel consumption) of the first embodiment of the present invention;
Fig. 6 is a graph of the second embodiment of the present invention, which is corresponding to Fig. 2;
Fig. 7 involves graphs to show relations between (a) an engine rotating speed and a pump displacement, (b) a vehicle driving speed and the engine rotating speed and (c) the vehicle driving speed and an engine power output (amount of fuel consumption) of the third embodiment of the present invention; and
Fig. 8 is a flow chart of the fourth embodiment of the present invention.

**DETAILED DESCRIPTION OF THE PREFERRED EMBODIMENTS**

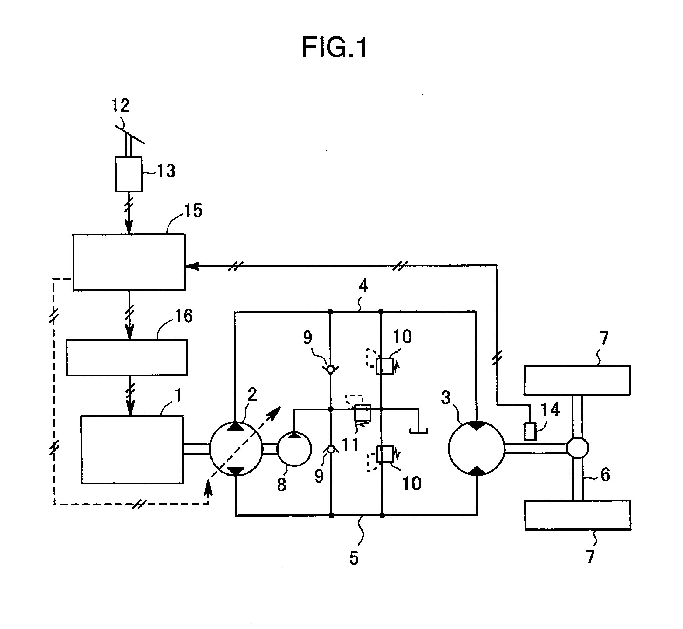

First Embodiment (Fig 1 - Fig. 5)

In the first embodiment, a control is switched, based on a driving acceleration, between a normal control and a power control by recognizing a first driving mode that is driving on a flat ground or a second driving mode that is driving on an uphill road.

Fig. 1 shows a hydraulic circuit and a control system. As shown in Fig. 1, an engine 1 drives a hydraulic pump 2. A variable displacement motor 3 is driven by hydraulic oil delivered by the hydraulic pump 2. By connecting the hydraulic pump 2 and the variable displacement motor 3 with pipe lines 4 and 5, a closed circuit is formed. A torque of the hydraulic motor 3 is transmitted to an axle 6 through wheels 7 and 7. A charging pump 8 is mounted on a common shaft with the hydraulic pump 2. When pressure caused in the pipe lines 4 and 5 drops, the hydraulic oil is charged into the pipe lines 4 and 5 from the charging pump 8 through check valves 9 and 9. A high pressure relief-valve 11 sets delivery pressure of the charging pump 8.

As a driving mode detecting means, a sensor 13 for detecting the amount of manipulated accelerator and a sensor 14 for detecting the amount of an axle revolution are provided. The sensor 13 corresponds to a manipulated accelerator amount detecting means to detect the amount of manipulation of an accelerator pedal 12. The sensor 14 for detecting axle revolution detects the number of revolutions of the axle 6, and it is an element to analyze the vehicle driving speed. The signals of the amount of the manipulated accelerator and the number of the axle revolution that are detected by the sensors 13, 14 are input into a controller 15. Now, the amount of the manipulated accelerator equals to the opened degree of the accelerator. The controller 15 calculates the vehicle driving speed V using the detected number of revolutions of accelerator $\omega$ a, the known speed reduction ratio Re, the wheel diameter Rt and the following formula.

$$V = \omega a / Re \times 2\pi \cdot 60/1000$$

The controller 15 calculates the driving acceleration by differentiating the vehicle driving speed V with time. Moreover, it is preferable that the calculated driving acceleration should be processed with a filter such as moving average processing filter in order to remove noises. Further, the controller 15 discriminates between driving on the flat ground (the first driving mode) and driving on the uphill road (the second driving mode) based on the obtained driving acceleration. Furthermore, in case of driving on the flat ground, the controller 15 executes the normal control that keeps the engine rotating speed relatively low, and in case of driving on the uphill road, the controller executes the power control that keeps the engine rotating speed relatively high. As described hereinafter, in case of driving on the flat ground, the low vehicle driving speed zone is included, while in case of driving on the uphill road, the high vehicle driving speed zone is included.

Additionally, in each embodiment of the present invention, the "power control" is defined as the control that, after stopping the normal control mode, uses the engine rotating speed responding to the amount of manipulated accelerator as it is.

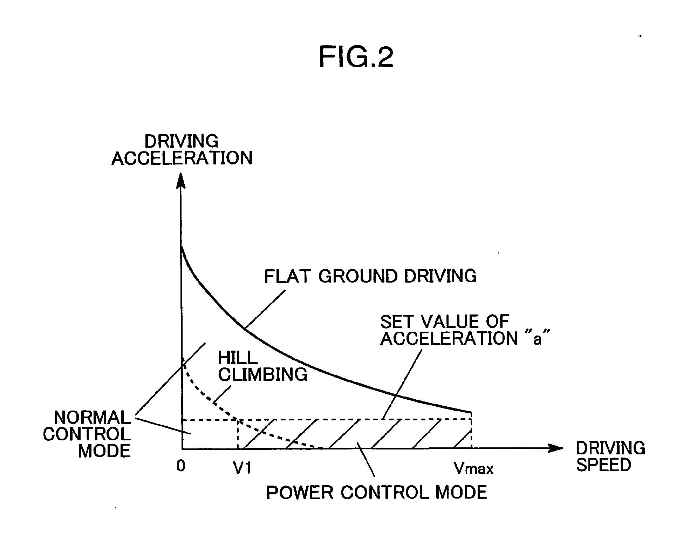

All actions including actions of the controller 15 are explained in Fig.2 through Fig.5. In the explanation hereunder, "control ON" is defined as executing the normal control mode, and "control OFF" is defined as executing the cancellation of the normal control that means to execute the power control.

Fig. 2 is a graph to show the relations between the vehicle driving speed and the driving acceleration each on the flat ground and the uphill road. In Fig. 2, generic characteristics of the vehicle that is referred as items

(i) and (ii) below is illustrated.
(i) In driving on the uphill road, as the body weight decreases the driving acceleration, therefore the driving acceleration becomes lower than that in driving on the flat ground in a full range of the vehicle driving speed.
(ii) Both in driving on the flat ground and in driving on the uphill road, the driving acceleration decreases responding to an increment of the vehicle driving speed.

In the controller 15, a threshold "a" by which the driving acceleration can be controlled ON or OFF is predetermined. When the driving acceleration becomes higher than "a", the control is switched to ON, and when the driving acceleration becomes below "a", the control is switched to OFF. "ON" means that the normal control is selected, while "OFF" means that the power control is selected. Furthermore, while driving on the flat ground, the driving acceleration becomes more than "a" in all vehicle driving speed range. On the contrary, in driving on the uphill road, the driving acceleration becomes below "a" in the high speed range exceeding V1 as shown in Fig. 2.

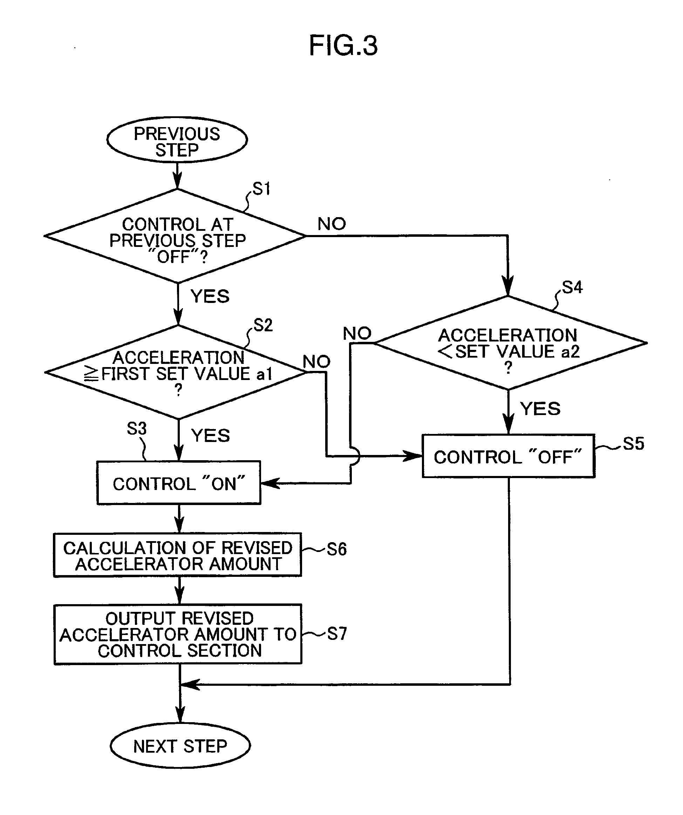

In the flow chart Fig. 3, whether the control of the previous step is recognized OFF (power control) in a step S1 or not. Here, if the decision is YES, namely the driving acceleration is larger than the set value a1, the decision is made that the vehicle is driving on the flat ground and that driving energy necessary for the vehicle is relatively low. In a step S3, the control is switched to ON (normal control). Here, in driving on the flat ground, the low vehicle speed range includes the uphill driving speed that is below V1.

Alternatively, if the decision is NO in the step S1, the driving acceleration at that time is discriminated whether it is below the set value a2 or not. Even though the decision is NO in this step, driving on the flat ground is recognized to proceed to a step S3, and therefore the normal control is selected.

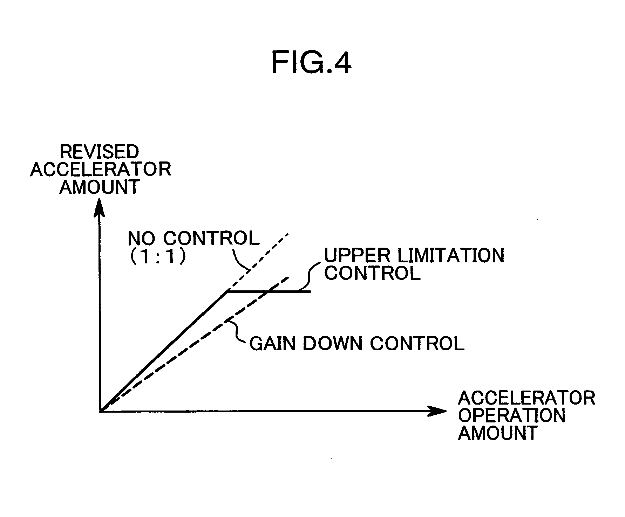

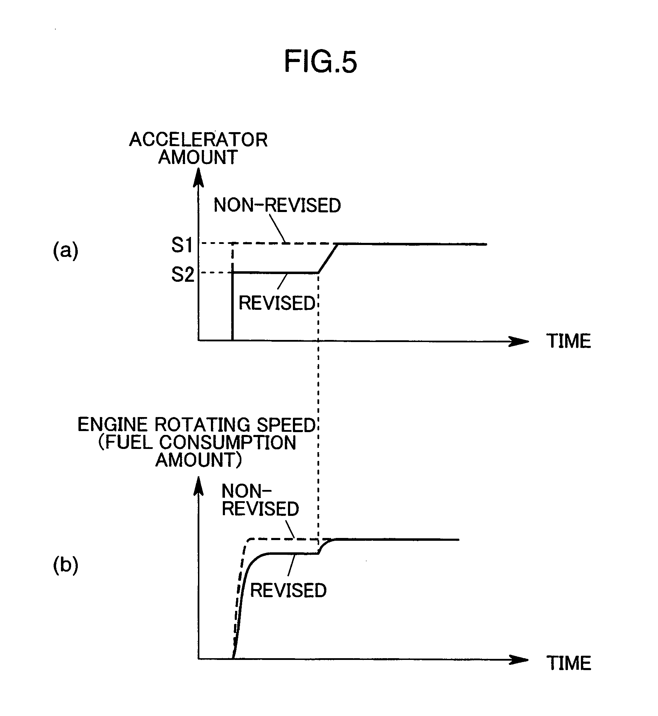

When the normal control starts, in a step S6, the revised amount of driving acceleration that is the amount of driving acceleration subjected to an upper limit is calculated based on the relation of the amount of manipulated accelerator and the revised amount of accelerator, as shown in Fig. 4. In a step S7, the modified amount of accelerator "S2" shown in Fig. 5(a) is sent from the controller 15 to an engine control portion 16. In Fig. 5 (a), "S1" shows non-revised amount of manipulated accelerator.

There is one method to calculate the revised amount of accelerator "S2". The method modifies the amount of manipulated accelerator by an upper limit as shown by a solid line in Fig. 4. Alternatively, there is another method which multiplies the amount of manipulated accelerator by a constant gain. This method is shown by a broken line in Fig. 4. Either method can be used for the embodiment of the present invention. A light broken line shown in Fig. 4 indicates the case that the amount of manipulated accelerator is not modified.

Further, in the engine control portion 16, the amount of fuel injection is set based on the revised amount of accelerator, and then the engine rotating speed is controlled. Consequently, as shown in Fig. 5(b), the engine rotating speed becomes lower than that of non-revised case. As the amount of fuel consumption corresponds to the engine rotating speed, the fuel economy is improved.

Meanwhile, if the decision is NO in the step S2, the power control continues as it has been in a step S5. If the decision is YES in a step S4, the normal control mode is switched to the power control mode in the step S5.

As in this power control mode, as shown in Fig. 5(a), the amount of manipulated accelerator increases from the revised amount "S2" to the non-revised amount "S1", and therefore the amount of fuel injection also increases, as shown in Fig. 5(b), the engine rotating speed increases up to an original set value in which normal control is not executed. Because of this, the engine power output increases, and consequently the accelerating performance of the vehicle is improved when the vehicle drives on the uphill road in the high speed zone that is higher than the vehicle driving speed V1.

Furthermore, in Fig. 2, the control is switched depending on the condition whether the driving acceleration is more than or less than the set value "a". However, in order to prevent hunting from occurring in the control, the threshold "a1" for switching from the control OFF to the control ON and the threshold "a2" for switching from the control ON to the control OFF should be set independently.

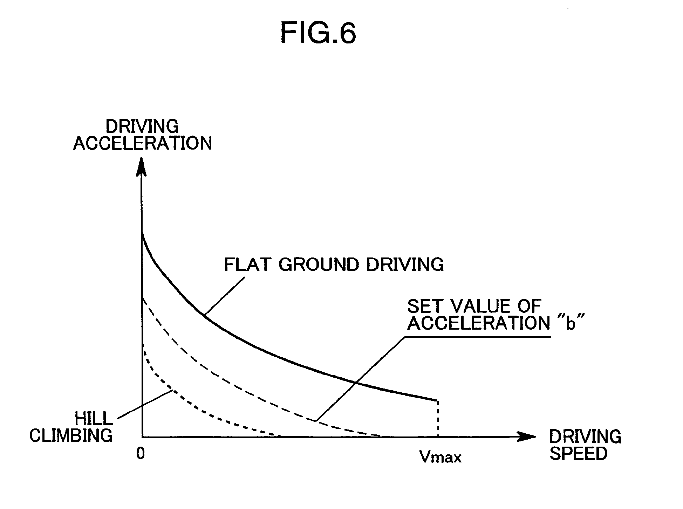

Second Embodiment (Fig. 6)

As shown in Fig. 2, the driving acceleration varies responding to the vehicle driving speed, regardless of whether the vehicle is driving on the flat ground or driving on the uphill road. In other words, the driving acceleration becomes low at the high speed zone.

Accordingly, as explained in the first embodiment, if the driving acceleration to decide whether the vehicle is in driving on the flat ground or in driving on the uphill road is fixed at a constant value, regardless of the vehicle driving speed, it is not possible to recognize whether it is in driving on the uphill road or not, unless the vehicle driving speed exceeds the constant value. For this reason, the power for driving on the uphill road possibly comes short in the low speed range. Therefore, in the second embodiment of the present invention, the set value of the driving acceleration "b" changes to decrease at the high speed zone responding to the vehicle driving speed.

In this case, in the flow chart Fig. 3, a compared target value of driving acceleration in the steps S2 and S4 changes from the set value "a" to the set value "b". However, the rest contents of control can be left the same as in the first embodiment of the present invention.

In this configuration, as the set value "b" is decided to become larger than the driving acceleration in the full range of the vehicle driving speed, the power control is selected initially regardless of the vehicle driving speed in driving on the uphill road. Therefore, the second embodiment of the present invention can secure the power enough for driving on the uphill road.

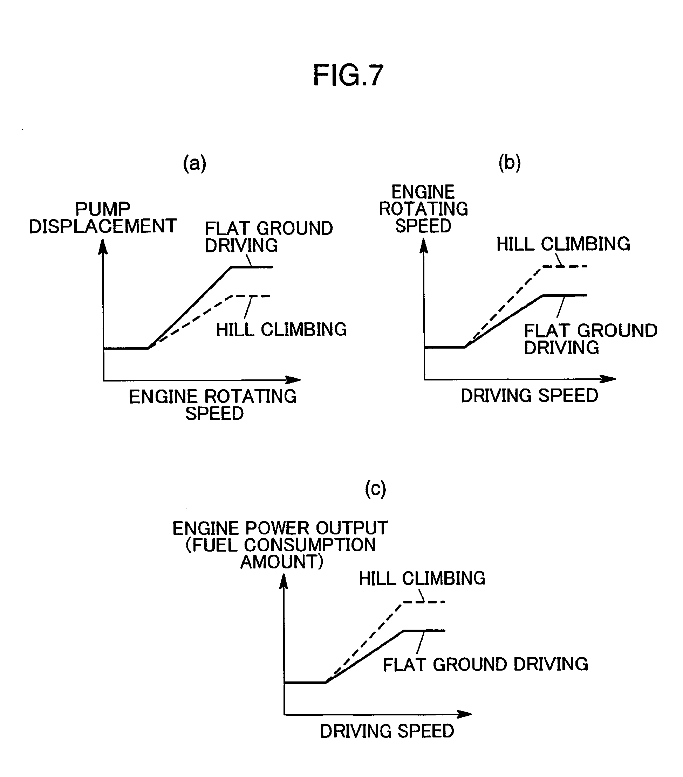

Third Embodiment (Fig. 7)

In the first embodiment of the present invention, the normal control decreases the amount of fuel injection of the engine 1. On the contrary, in the third embodiment of the present invention, by using a variable displacement pump as the hydraulic pump 2, the displacement of the hydraulic pump 2 increases in the normal control as shown in the broken line in Fig. 1.

An amount of pump discharge Qp is calculated from the engine rotating speed ω e and pump displacement qp by the following formula.

$$Qp = \omega e \times qp$$

Therefore, keeping the amount of pump discharge Qp necessary to maintain the vehicle driving speed, the engine rotating speed ω e can be decreased by increasing the pump displacement qp.

In the third embodiment of the present invention, similarly to the first embodiment of the present invention, when the decision is made based on the driving acceleration as driving on the flat ground, the controller 15 in Fig. 1 sends a pump displacement signal to the hydraulic pump 2. More precisely, the displacement signal is sent to a pump regulator. By this processing, the displacement of the hydraulic pump increases more than that of driving on the uphill road in relation to the engine rotating speed as shown in Fig. 7 (a).

As shown in Fig. 7 (b) and (c), the engine rotating speed which maintains the vehicle driving speed decreases while driving on the flat ground and the engine power output decreases consequently. Therefore, similarly to the first embodiment of the present invention, the fuel economy can be improved. Now, the engine power output corresponds to the amount of the fuel consumption.

On the contrary, while driving on the uphill road, by reducing the pump displacement, the engine rotating speed increases, and then the engine power output also increases to secure the power necessary for driving on the uphill road in the third embodiment the present invention.

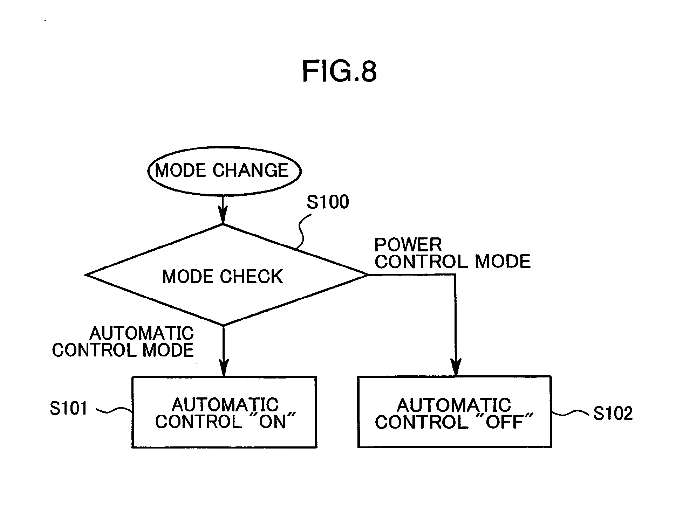

Fourth Embodiment (Fig. 8)

In the fourth embodiment of the present invention, a control mode switching means is provided. As an example of a control mode switching means, a transfer switch can be used. By switching the control mode switching means, an operator can select control mode optionally between "automatic control mode" and "power control mode".

Fig. 8 shows a flow chart of the mode switching. In a step S100, the mode selected by the mode switching means is recognized. In a step S101 or step S102, the control mode is selected between the automatic control mode and the power control mode in response to the control mode recognized in the step S100.

When the automatic control mode is selected, the automatic control is switched to ON. Therefore, responding to the driving acceleration, automatic switching is executed between the normal control and the power control based on the flow chart in Fig. 3. On the other hand, when the power control mode is selected, the automatic control is switched to OFF, and the power control is executed at all times.

In the fourth embodiment of the present invention, according to operator's preference of operation and the driving condition, an operator can select the mode optionally between the automatic control mode seeking for a balance of power and fuel economy and the power control mode giving a priority to power.

Other Embodiments

In the above mentioned embodiments of the present invention, in order to decide whether the vehicle is driving on the flat ground or driving on the uphill road, the driving acceleration is used, however, it is also possible to use detecting a body inclination angle. In this case, when the detected angle becomes more than a set value, the vehicle is in driving on the uphill road, and when the angle becomes less than the set value, the vehicle is in driving on the flat ground.

In this case, the comparison between the detected body inclination angle and the set value is made in steps S2 and S4 of the flow chart in Fig. 3.

Alternatively, it is also possible to detect both the driving acceleration and the body inclination angle. In this case, when at least one of either the driving acceleration or the body inclination angle is larger than the respective set value, then the decision can be made as driving on the flat ground.

**Claims**

1. A control apparatus of a hydraulic driven vehicle, comprising;
   an engine (1);
   a hydraulic pump (2) driven by said engine (1) ; and
   a hydraulic motor (3) driven by hydraulic oil supplied from said hydraulic pump (2);
   a driving mode detecting means (13, 14) which detects whether the hydraulic driven vehicle is in a first driving mode which needs relatively less driving energy or in a second driving mode which needs relatively more driving energy; and
   a control means (15) which controls an engine rotating speed based on the driving mode detected in said driving mode detecting means, said control means (15) executing a normal control which holds the engine rotating speed relatively lower in the first driving mode, said control means (15) executing a power control which holds the engine rotating speed relatively higher in the second driving mode, **characterized in that**
   said driving mode detecting means (13, 14) detects at least one of a driving acceleration and a body inclination angle as an information of the driving mode, said control means (15) executes said normal control when the driving acceleration is larger than a set value for driving acceleration or the body inclination angle is less than a set value for body inclination angle, and executes said power control when the driving acceleration is not larger than the set value for driving acceleration and the body inclination angle is not less than the set value for body inclination angle.

2. The control apparatus according to claim 1, wherein said control means (15) switches to the power control when a vehicle driving speed detected by a vehicle driving speed detecting means (14) while driving in the normal control becomes larger than a set value for vehicle driving speed.

3. The control apparatus according to claim 1, wherein said driving mode detecting means (13, 14) detects the driving acceleration as the information of the driving mode,
   said control means (15) decreases the set value for driving acceleration at a high driving speed zone.

4. The control apparatus according to claim 3, wherein said control means (15) switches to the power control when the vehicle driving speed detected by said vehicle driving speed detecting means (14) while driving in the normal control becomes larger than the set value for vehicle driving speed.

5. The control apparatus according to any one of claim 1 through 4, wherein
   said control means (15) decreases an amount of fuel injection of said engine in the normal control less than that in the power control, the amount of fuel injection corresponding to an amount of manipulated accelerator detected by a manipulated accelerator amount detecting means (13).

6. The control apparatus according to any one of claims 1 through 4, wherein
   said control means (15) limits a maximum amount of fuel injection of said engine in the normal control more than that in the power control, the maximum amount of fuel injection corresponding to the amount of manipulated accelerator detected by said manipulated accelerator amount detecting means (13).

7. The control apparatus according to any one of claims 1 through 4, wherein
   said control means (15) increases a pump displacement of said hydraulic pump (2) in the normal control more than that in the power control.

8. The control apparatus according to any of one claims 1 through 7, further comprising,
   a mode switching means which selects an automatic control mode which switches automatically from the normal control to the power control responding to the first or second vehicle driving mode, or the power control mode which stops the automatic control mode and executes only the power control.

**Patentansprüche**

1. Steuergerät eines hydraulisch angetriebenen Fahrzeugs, mit:

   einem Antrieb (1);
   einer durch den Antrieb (1) angetriebenen hydraulischen Pumpe (2); und
   einem durch von der hydraulischen Pumpe (2) zugeführtes hydraulisches Öl angetriebenen hydraulischen Motor (3);
   einer Fahrbetriebsarterfassungsvorrichtung (13, 14), die erfasst, ob das hydraulisch angetriebene Fahrzeug in einer ersten Fahrbetriebsart ist, die verhältnismäßig weniger Fahrenergie benötigt, oder in einer zweiten Fahrbetriebsart, die verhältnismäßig mehr Fahrenergie benötigt; und
   einer Steuervorrichtung (15), die eine Antriebsdrehzahl auf der Grundlage der in der Fahrbetriebsarterfassungsvorrichtung erfassten Fahrbetriebsart steuert, wobei die Steuervorrichtung (15) eine normale Steuerung ausführt, die die Antriebsdrehzahl in der ersten Fahrbetriebsart verhältnismäßig niedriger hält, und wobei die Steuervorrichtung (15) eine Leistungssteuerung ausführt, die die Antriebsdrehzahl in der zweiten Fahrbetriebsart verhältnismäßig höher hält,
   **dadurch gekennzeichnet, dass**
   die Fahrbetriebsarterfassungsvorrichtung (13, 14) mindestens entweder eine Fahrbeschleunigung oder einen Körperneigungswinkel als eine Information der Fahrbetriebsart erfasst, und dass
   die Steuervorrichtung (15) die normale Steuerung ausführt, wenn die Fahrbeschleunigung größer als ein festgesetzter Wert für die Fahrbeschleunigung oder der Körperneigungswinkel geringer als ein festgesetzter Wert für den Körperneigungswinkel ist, und die Leistungssteuerung ausführt, wenn die Fahrbeschleunigung nicht größer als der festgesetzte Wert für die Fahrbeschleunigung und der Körperneigungswinkel nicht geringer als der festgesetzte Wert für den Körperneigungswinkel ist.

2. Steuergerät nach Anspruch 1, wobei die Steuervorrichtung (15) zu der Leistungssteuerung schaltet, wenn eine von einer Fahrzeugfahrgeschwindigkeiterfassungsvorrichtung (14) erfassten Fahrzeugfahrgeschwindigkeit während des Fahrens bei der normalen Steuerung größer als ein festgesetzter Wert für die Fahrzeugfahrgeschwindigkeit wird.

3. Steuergerät nach Anspruch 1, wobei die Fahrbetriebsarterfassungsvorrichtung (13, 14) die Fahrbeschleunigung als die Information der Fahrbetriebsart erfasst, und wobei die Steuervorrichtung (15) den festgesetzten Wert für die Fahrbeschleunigung in einem Bereich hoher Fahrgeschwindigkeit verringert.

4. Steuergerät nach Anspruch 3, wobei die Steuervorrichtung (15) zu der Leistungssteuerung schaltet, wenn die durch die Fahrzeugfahrgeschwindigkeiterfassungsvorrichtung (14) erfasste Fahrzeugfahrgeschwindigkeit während des Fahrens bei der normalen Steuerung größer als der festgesetzte Wert für die Fahrzeugfahrgeschwindigkeit wird.

5. Steuergerät nach einem der Ansprüche 1 bis 4, wobei
   die Steuervorrichtung (15) einen Betrag einer Kraftstoffeinspritzung des Antriebs bei der normalen Steuerung weniger als den bei der Leistungssteuerung verringert, wobei der Betrag der Kraftstoffeinspritzung einem Betrag eines verstellten Beschleunigers entspricht, der durch eine Erfassungsvorrichtung für den Beschleunigerverstellungsbetrag (13) erfasst wird.

6. Steuergerät nach einem der Ansprüche 1 bis 4, wobei
   die Steuervorrichtung (15) einen Höchstbetrag an Kraftstoffeinspritzung des Antriebs bei der normalen Steuerung mehr als den bei der Leistungssteuerung begrenzt, wobei der Höchstbetrag der KraftstofFeinspritzung dem Betrag des von der Erfassungsvorrichtung für den Beschleunigerverstellungsbetrag (13) erfassten Betrags eines verstellten Beschleunigers entspricht.

7. Steuergerät nach einem der Ansprüche 1 bis 4, wobei
   die Steuervorrichtung (15) eine Pumpenverdrängung der hydraulischen Pumpe (2) bei der normalen Steuerung mehr als die bei der Leistungssteuerung erhöht.

8. Steuergerät nach einem der Ansprüche 1 bis 7, ferner mit
   einer Betriebsartschaltvorrichtung, die eine automatische Steuerungsbetriebsart, die automatisch von der normalen Steuerung zur Leistungssteuerung als Antwort auf die erste oder zweite Fahrzeugfahrbetriebsart schaltet, oder die Leistungssteuerbetriebsart auswählt, die die automatische Steuerungsbetriebsart stoppt und nur die Leistungssteuerung ausführt.

**Revendications**

1. Appareil de commande d'un véhicule à commande hydraulique, comprenant ;
un moteur (1) ;
une pompe hydraulique (2) entraînée par ledit moteur (1) ; et
un moteur hydraulique (3) entraîné par une huile hydraulique fournie par ladite pompe hydraulique (2) ;
un moyen (13, 14) de détection de mode d'entraînement qui détecte si le véhicule à commande hydraulique se trouve dans un premier mode d'entraînement qui besoin de relativement moins d'énergie d'entraînement ou dans un deuxième mode d'entraînement hydraulique qui a besoin de relativement plus d'énergie d'entraînement ; et
un moyen de commande (15) qui commande une vitesse de rotation du moteur sur la base du mode d'entraînement détecté dans ledit moyen de détection de mode d'entraînement, ledit moyen de commande (15) exécutant une commande normale qui maintient la vitesse de rotation du moteur relativement plus basse dans le premier mode d'entraînement, ledit moyen de commande (15) exécutant une commande de puissance qui maintient la vitesse de rotation du moteur relativement plus élevée dans le deuxième mode d'entraînement, **caractérisé en ce que**
ledit moyen (13, 14) de détection de mode d'entraînement détecte au moins l'une d'une accélération d'entraînement et d'un angle d'inclinaison de corps comme information du mode d'entraînement,
ledit moyen de commande (15) exécute ladite commande normale lorsque l'accélération d'entraînement est plus grande qu'une valeur réglée pour l'accélération d'entraînement ou l'angle d'inclinaison de corps est plus petit qu'une valeur réglée pour l'angle d'inclinaison de corps, et exécute ladite commande de puissance lorsque l'accélération d'entraînement n'est pas plus grande que la valeur réglée pour l'accélération d'entraînement et l'angle d'inclinaison du corps n'est pas plus petit que la valeur réglée pour l'angle d'inclinaison de corps.

2. Appareil de commande selon la revendication 1, dans lequel ledit moyen de commande (15) bascule sur la commande de puissance lorsqu'une vitesse d'entraînement du véhicule détectée par le moyen (14) de détection de la vitesse d'entraînement du véhicule pendant l'entraînement dans la commande normale devient plus grande que la valeur réglée pour la vitesse d'entraînement du véhicule.

3. Appareil de commande selon la revendication 1, dans lequel ledit moyen (13, 14) de détection de mode d'entraînement détecte l'accélération d'entraînement comme information du mode d'entraînement, ledit moyen de commande (15) diminue la valeur réglée pour l'accélération d'entraînement à une zone de vitesse d'entraînement élevée.

4. Appareil de commande selon la revendication 3, dans lequel ledit moyen de commande (15) bascule sur la commande de puissance lorsque la vitesse d'entraînement du véhicule détectée par ledit moyen (14) de détection de vitesse d'entraînement du véhicule pendant l'entraînement dans la commande normale devient plus grande que la valeur réglée pour la vitesse d'entraînement du véhicule.

5. Appareil de commande selon l'une quelconque des revendication 1 à 4, dans lequel
ledit moyen de commande (15) diminue une quantité d'injection de carburant dudit moteur dans la commande normale moins que dans la commande de puissance, la quantité d'injection de carburant correspondant à une quantité d'un accélérateur manipulé détectée par un moyen (13) de détection de quantité d'accélérateur manipulé.

6. Appareil de commande selon l'une quelconque des revendications 1 à 4, dans lequel
ledit moyen de commande (15) limite une quantité maximale d'injection de carburant dudit moteur dans la commande normale plus que dans la commande de puissance, la quantité maximale d'injection de carburant correspondant à la quantité d'un accélérateur manipulé détectée par ledit moyen (13) de détection de quantité d'accélérateur manipulé.

7. Appareil de commande selon l'une quelconque des revendications 1 à 4, dans lequel
ledit moyen de commande (15) augmente une cylindrée de pompe de ladite pompe hydraulique (2) dans la commande normale plus que dans la commande de puissance.

8. Appareil de commande selon l'une quelconque des revendications 1 à 7, comprenant en outre,
un moyen de commutation de mode qui sélectionne un mode de commande automatique qui bascule automatiquement de la commande normale à la commande de puissance en réponse au premier ou au deuxième mode d'entraînement du véhicule, ou au mode de commande de puissance qui arrête le mode de commande automatique et n'exécute que la commande de puissance.

# FIG.1

# FIG.2

# FIG.3

```
         ┌─────────────┐
         │  PREVIOUS   │
         │    STEP     │
         └──────┬──────┘
                │
                ▼              S1
          ╱─────────────╲
         ╱   CONTROL AT   ╲        NO
        ╱  PREVIOUS STEP   ╲────────────────────┐
        ╲     "OFF"?       ╱                     │
         ╲                ╱                      │
          ╲─────┬────────╱                       ▼              S4
                │                         ╱──────────────╲
              YES                        ╱   ACCELERATION  ╲
                │              S2    NO ╱   <SET VALUE a2    ╲
                ▼                      ╲        ?            ╱
          ╱─────────────╲              ╲                   ╱
         ╱ ACCELERATION  ╲   NO         ╲────────┬────────╱
        ╱ ≧FIRST SET VALUE a1───┐                │
        ╲       ?        ╱      │              YES
         ╲              ╱       │                │
          ╲─────┬──────╱        │                ▼
    S3          │               │      ┌──────────────────┐  S5
                YES             │      │  CONTROL "OFF"    │
                ▼               │      └────────┬─────────┘
      ┌──────────────────┐◄─────┘               │
      │  CONTROL "ON"    │                       │
      └────────┬─────────┘                       │
               │                                 │
               ▼                                 │
  ┌──────────────────────┐  S6                   │
  │ CALCULATION OF REVISED│                       │
  │ ACCELERATOR AMOUNT    │                       │
  └────────┬─────────────┘                       │
           │                                      │
           ▼                                      │
  ┌──────────────────────┐  S7                    │
  │  OUTPUT REVISED       │                        │
  │ ACCELERATOR AMOUNT TO │                        │
  │  CONTROL SECTION      │                        │
  └────────┬─────────────┘                        │
           │◄────────────────────────────────────┘
           ▼
     ┌─────────────┐
     │  NEXT STEP  │
     └─────────────┘
```

# FIG.4

REVISED
ACCELERATOR
AMOUNT

NO CONTROL
(1 : 1)

UPPER LIMITATION
CONTROL

GAIN DOWN CONTROL

ACCELERATOR
OPERATION
AMOUNT

# FIG.5

(a)

ACCELERATOR
AMOUNT

NON-REVISED

S1

S2

REVISED

TIME

(b)

ENGINE ROTATING SPEED
(FUEL CONSUMPTION
AMOUNT)

NON-
REVISED

REVISED

TIME

# FIG.6

DRIVING
ACCELERATION

FLAT GROUND DRIVING

SET VALUE OF
ACCELERATION "b"

HILL
CLIMBING

0

Vmax

DRIVING
SPEED

# FIG.7

(a)

PUMP
DISPLACEMENT   FLAT GROUND
DRIVING

HILL CLIMBING

ENGINE ROTATING
SPEED

(b)

ENGINE
ROTATING
SPEED

HILL CLIMBING

FLAT GROUND
DRIVING

DRIVING SPEED

(c)

ENGINE POWER OUTPUT
(FUEL CONSUMPTION
AMOUNT)

HILL CLIMBING

FLAT GROUND DRIVING

DRIVING SPEED

# FIG.8

```
        ( MODE CHANGE )
               │
               │      S100
               ▼
           ╱───────────╲        POWER
          ╱             ╲       CONTROL MODE
         ╱  MODE CHECK   ╲──────────────┐
          ╲             ╱               │
           ╲───────────╱                │
               │                        │
      AUTOMATIC │                        │
   CONTROL MODE │                        │
               ▼                        ▼
   ┌──────────────────┐      ┌──────────────────┐
S101│    AUTOMATIC     │      │    AUTOMATIC     │ S102
   │  CONTROL "ON"    │      │  CONTROL "OFF"   │
   └──────────────────┘      └──────────────────┘
```

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003264903 A

- US 4523892 A